# FASCICULE DE BREVET EUROPEEN

(11) **EP 2 035 504 B1**
(45) Date de publication et mention de la délivrance du brevet: **14.04.2021**
(21) Numéro de dépôt: 07788968.1
(22) Date de dépôt: 06.06.2007
(51) Int. Cl.: C08L 95/00, C08L 71/02

(54) **PRODUITS BITUMINEUX ET EMULSIONS AQUEUSES A BASE DE PRODUITS BITUMINEUX ET LEURS UTILISATIONS**
BITUMINÖSE PRODUKTE UND WÄSSRIGE EMULSIONEN AUF BASIS VON BITUMINÖSEN PRODUKTEN UND VERWENDUNGEN DAVON
BITUMINOUS PRODUCTS AND AQUEOUS EMULSIONS BASED ON BITUMINOUS PRODUCTS AND USES THEREOF

(30) Priorité: 06.06.2006 FR 0652035; 13.11.2006 US 858568 P
(43) Date de publication de la demande: 18.03.2009
(73) Titulaire: ARKEMA FRANCE, 92700 Colombes (FR)
(72) Inventeur: BARRETO, Gilles, F-69510 Messimy (FR); GRAMPRE, Lionel, F-69110 Sainte Foy Les Lyon (FR)
(74) Mandataire: Arkema Patent
(86) Numéro de dépôt international: PCT/FR2007/051384
(87) Numéro de publication internationale: WO 2007/141458

(56) Documents cités:
- EP-A1- 0 425 151
- EP-A2- 0 246 612
- EP-A2- 0 926 191
- FR-A1- 2 781 234
- DATABASE WPI Week 198333 Derwent Publications Ltd., London, GB; AN 1983-738925 XP002421221 & JP 58 117253 A (CHIYODA CHEM ENG KK) 12 juillet 1983 (1983-07-12)

## Description

### Domaine de l'invention

La présente invention concerne le domaine de l'étanchéité, la construction et l'entretien de tapis routiers, de trottoirs et pistes d'aviation où l'on utilise des mélanges de granulats et de produits bitumineux.

Dans le cadre de la présente invention, on entend par produits ou liants bitumineux, le bitume naturel et les bitumes issus d'une huile minérale et les mélanges qui en résultent. Les bitumes obtenus par craquage et les goudrons sont aussi ici considérés comme produits bitumineux au sens de la présente invention, ainsi que les mélanges qui peuvent en résulter. Les résidus de distillation sous vide, de distillation, de précipitation (comme par exemple au propane), les bitumes soufflés sont des exemples considérés dans le cadre de cette invention. On considère également ici les bitumes dilués à l'aide de solvants pétroliers, les bitumes dilués à l'aide d'huiles végétales et les bitumes polymères. Les produits bitumineux listés ci-dessus sont anhydres, autant que faire se peut à l'échelle de production industrielle concernée.

On entend dans la présente invention par granulats des matériaux minéraux divisés produits en carrière, des agrégats d'enrobés, des fraisats, des mâchefers, des scories et des laitiers ainsi que des recyclats de démolition du béton.

Dans tout ce qui suit, le mélange de granulats et de produits bitumineux sera également appelé « enrobé ».

De nombreux procédés de production des mélanges de granulats et de produits bitumineux sont actuellement utilisés, que l'on peut classer en trois classes distinctes : les procédés de production à température ambiante, les procédés à une température supérieure à 100°C et les procédés à des températures intermédiaires entre température ambiante et 100°C, c'est-à-dire pour lesquels un apport d'énergie thermique à la production de l'enrobé est nécessaire tout en permettant la présence d'eau liquide dans l'enrobé.

Les procédés de production d'enrobés à température ambiante sont ceux pour lesquels la production du mélange entre liant bitumineux et granulats se fait sans apport d'énergie thermique. On peut citer l'enrobage de granulats à l'aide de bitume additivé d'un solvant volatil de manière à le rendre suffisamment fluide à température ambiante pour permettre un bon enrobage des granulats. L'enrobé est par la suite mis en œuvre à l'aide du matériel adapté permettant le transport, la dépose et le compactage. Cette technique tend à disparaître car elle consomme des solvants en quantités importantes, solvants qui en étant évaporés dans l'atmosphère créent une pollution évitable par d'autres techniques.

On peut citer également les techniques de production utilisant comme vecteur du bitume, les émulsions ou dispersions de bitume dans un solvant aqueux. L'émulsion ou dispersion de bitume est mélangée avec les granulats de manière à assurer un bon enrobage. Le mélange obtenu est ensuite mis en œuvre à l'aide du matériel adapté permettant le transport, la dépose et le compactage éventuel. Ces techniques ont l'avantage de concentrer la phase où de fortes températures sont rencontrées dans une usine où a lieu la fabrication de l'émulsion. Le granulat utilisé à température ambiante peut contenir de l'eau. Ces techniques ne nécessitent donc pas de traitement thermique des granulats, ce qui limite la consommation d'énergie lors de la production de l'enrobé et la production de poussières. De plus, le mélange étant à température ambiante, c'est-à-dire entre environ 5°C et 30°C, les émissions de composés organiques volatils sont très faibles. Cependant, les performances mécaniques obtenues avec ces mélanges sont en général en retrait par rapport à celles obtenues avec d'autres techniques décrites ci-dessous, notamment au jeune âge. Cette technique a trouvé son créneau dans l'entretien routier pour des chaussées faiblement à moyennement sollicitées, par exemple routes du réseau secondaire, parkings de logements individuels ou collectifs, d'immeubles, pistes cyclables....

Cette technique s'applique notamment aux enrobés coulés à froid pour lesquels le problème de la mise en place est résolu dans la plupart des cas si l'on suit les règles de l'art, puisque l'enrobé coulé à froid est mis en place sous forme de "soupe" quelques secondes après avoir été fabriqué. On retrouve par contre l'étape nécessaire de montée en cohésion qui se fait généralement sans sollicitation extérieure, par évolution chimique et physique du système bien que dans certains cas un compactage soit effectué. Cette évolution fait intervenir la coalescence du bitume de l'émulsion, coalescence qui dépend fortement de la qualité du bitume et qui peut conduire à des cohésions insuffisantes au jeune âge, malgré une conduite de la machine de production selon les règles de l'art. Pour cette raison l'homme de l'art, lorsqu'il a le choix, préfère choisir un bitume appartenant à la classe des bitumes naphténiques. Ces bitumes se distinguent des autres bitumes par une composition chimique contenant des molécules naphténiques en quantité très significative. Les bitumes naphténiques présentent cependant l'inconvénient d'être produits en moindre quantité que les autres bitumes, voire d'être absents à la vente dans certaines zones géographiques. Quand le bitume naphténique n'est pas disponible, l'obtention d'une bonne qualité d'enrobés coulés à froid rend nécessaire une surveillance renforcée de la météorologie pour éviter les pluies juste après le chantier et nécessaire également la fermeture au trafic sur des temps plus longs après la fin du chantier. Il existe un besoin non satisfait d'améliorer les performances des enrobés coulés à froid utilisant des bitumes autres que naphténiques.

Les procédés à température supérieure à 100°C utilisent le bitume sous forme anhydre, dans un état de fluidité suffisant pour assurer un bon enrobage des granulats. De manière à assurer un bon enrobage et de bonnes performances mécaniques finales, il est classique de sécher les granulats et de les porter à une température proche de celle du bitume. Il existe deux types principaux de procédés, les procédés continus et discontinus.

Dans un procédé continu, les granulats entrent de manière continue dans un cylindre possédant un brûleur qui permet le chauffage des granulats par rayonnement de flamme. Dans une zone du cylindre non exposée au rayonnement, les granulats venant de la zone de séchage sont enrobés par le bitume liquide avant de sortir et d'être acheminés vers une trémie de stockage tampon.

Dans un procédé discontinu, on dispose d'un malaxeur maintenu à haute température dans lequel sont versés de manière discontinue les différentes fractions granulométriques du granulat. Celles-ci sont homogénéisées par malaxage puis le bitume est rajouté par versement. A la suite du malaxage, le mélange entre granulats et produit bitumineux obtenu peut être stocké en trémie. Le mélange obtenu est ensuite mis en œuvre à l'aide du matériel adapté permettant le transport, l'épandage et le compactage éventuel. Le mélange obtenu est transporté et déposé suffisamment chaud de manière à assurer un bon épandage, un bon lissage et un bon compactage éventuel. Le choix des températures du procédé dépend de la classe du bitume et est généralement réglementé. Pour les bétons bitumineux et les graves bitume en France par exemple, les températures des mélanges entre granulats et produits bitumineux en sortie de centrale, avec un bitume pur de pénétrabilité 35/50, sont généralement de 150 à 170°C, voire de 160 à 180°C quand les conditions météorologiques sont plus dures ; pour l'épandage la température des mélanges entre granulats et produits bitumineux est supérieure à 130°C. La norme française NF P 98-150 de décembre 1992 constitue la référence sur l'exécution des corps de chaussées, couches de liaison et couche de roulement en enrobés hydrocarbonés, la norme française NF P 98-130 de novembre 1999 constitue la référence pour les bétons bitumineux semi-grenus et la norme française NF P 98-138 de novembre 1999 constitue la référence pour les graves bitume. Elles imposent une température en sortie de centrale de 150 à 170°C et une température d'épandage de 130°C minimum pour un bitume pur de pénétrabilité 35/50. Il n'y a pas de contrainte sur la température de compactage, mais celui-ci est effectué immédiatement après l'épandage du mélange de manière à avoir la température de début de compactage la plus proche possible de la température du mélange à l'épandage. C'est en effet le maintien du bitume dans un état suffisamment liquide et donc sufisamment chaud qui permet de conserver une fluidité suffisante de l'enrobé pour réaliser correctement ces opérations.

Ces deux procédés d'enrobage à chaud, qui utilisent des centrales continues ou discontinues, sont les plus employés si l'on considère le tonnage de bitume consommé à l'échelle mondiale, que ce soit en construction routière, en entretien routier ou dans le domaine de l'étanchéité. Ils font référence dans l'état actuel de l'art. Ce sont en effet les deux procédés les plus robustes à l'échelle industrielle. Comme pour toutes les techniques présentées ici, il est nécessaire de contrôler précisément la granulométrie des granulats, la qualité du bitume qui doit respecter des normes déterminées par pays, et la qualité du procédé représentée entre autres par la qualité du malaxage déterminée par la géométrie de la zone de malaxage, par l'énergie de malaxage, par les vitesses des parties mobiles ainsi que par les différents temps du procédé. Peu de paramètres spécifiques doivent être contrôlés en plus pour assurer le bon déroulement des opérations et on constate que le comportement de l'enrobé reste assez stable en présence de fluctuations. Le simple contrôle supplémentaire de la température des granulats et du bitume au moment de la production et de l'enrobé à l'épandage permet d'assurer un bon déroulement des opérations. Si l'on veut faire la comparaison, les techniques à température ambiante décrites plus haut nécessitent le contrôle supplémentaire de paramètres tels que le pH, la teneur en eau, la teneur et la nature chimique en additifs, la position d'ajout de ces additifs, la nature chimique du granulat et son âge parfois.

Cependant, les deux procédés de fabrication de mélanges bitumineux à température supérieure à 100°C décrits ci-dessus ne sont pas exempts de défauts :
- Tous les bitumes ne donnent pas les mêmes performances aux enrobés produits : les deux grandes classes de bitume naphténique et non naphténique se distinguent, avec un avantage au bitume naphténique. Ce dernier donne, à températures de granulats et de bitume identiques ou proches, une meilleure fluidité au mélange avec les granulats. En pratique, cela se traduit également par une meilleure faculté de compactage et une meilleure cohésion. On constate également que l'on peut baisser la température du mélange des granulats et du bitume naphténique de 5 à 15°C par rapport au cas où l'on utilise du bitume non naphténique, tout en conservant une fluidité identique au mélange entre bitume non naphténique et granulats. Là aussi, il existe un besoin non satisfait d'améliorer les performances des mélanges de bitume non naphténique et de granulats.
- Le chauffage et le séchage des granulats conduisent à une consommation importante de combustible d'origine fossile, donc non renouvelable. Lorsqu'on analyse le procédé du point de vue thermique, on se rend compte que seul le bitume est initialement chaud à l'entrée de la centrale d'enrobage, les granulats, qui constituent en général 90 à 96% de la masse de l'enrobé, sont à température ambiante. On passe par la phase de chauffage temporaire des granulats de manière à assurer un enrobage de bonne qualité avec le bitume et de manière également à permettre une bonne mise en œuvre. Par contre, le produit mis en place n'acquiert ses performances intéressantes qu'une fois refroidi. Toute l'énergie dépensée est finalement libérée dans l'atmosphère.
- De manière concomitante, sont générées de grandes quantités de gaz à effet de serre (GES) et de poussières partiellement collectées et réinjectées dans le circuit d'enrobage. La mise en œuvre elle-même conduit à l'émission de composés organiques volatils sur le site d'épandage, qui ont une action sur l'effet de serre. Il est possible d'associer des dispositifs de captage sur finisseur, mais cela nécessite le rééquipement des ateliers de mise en œuvre actuels et n'élimine pas les émissions en provenance du tapis posé en aval du finisseur et augmente le prix du produit final.

- Les conditions de travail sont difficiles à cause du rayonnement thermique et des émissions gazeuses.
- Lorsque, pour des raisons non maîtrisables comme une dégradation des conditions météorologiques, la venue de la nuit, l'allongement de la durée de transport de la centrale vers le chantier par exemple, la température du mélange bitumineux fabriqué préalablement baisse en dessous d'une certaine limite, celui-ci ne peut plus être mis en place correctement ce qui conduit à des défauts de porosité et de performances mécaniques. La robustesse du procédé est limitée. Pour se prévaloir de cet effet, il est courant de produire l'enrobé à des températures supérieures à celles préconisées dans les textes officiels, ce qui revient à renforcer les trois premiers défauts cités.

Afin de diminuer l'amplitude des quatre derniers défauts cités ci-dessus, on peut envisager de diminuer la température de fabrication du mélange bitumineux, réduisant ainsi la consommation de combustible nécessaire au chauffage des composants de l'enrobé, la production de gaz à effet de serre et la gêne occasionnée lors de la mise en œuvre de l'enrobé, tout en essayant de modifier le moins possible le procédé de fabrication de l'enrobé par rapport aux procédés à température supérieure à 100 °C, et ce, notamment dans le but de minimiser les coûts.

### Art antérieur

La demande de brevet EP 425.151 revendique les mélanges de bitume et de polymères, en particulier des copolymères oxyde d'éthylène- oxyde de propylène, à des dosages compris de préférence entre 1 et 20 parts pour 100 parts de bitume. L'objectif qui est clairement de limiter la fluidité ou la fragilité des mélanges bitumineux ne peut être atteint quand le dosage en copolymère oxyde d'éthylène-oxyde de propylène est inférieur ou égal à 1 part pour 100 parts de bitume. Dans les exemples, l'addition du copolymère à 10 % entraîne soit une augmentation de la résistance à l'orniérage à 45°C et pas de changement de fragilité à froid, soit pas de changement de résistance à l'orniérage à 45°C et une diminution de la fragilité à froid du mélange du bitume ainsi additivé avec des granulats par rapport au cas sans additivation du bitume. La diminution de l'orniérage correspond à une diminution du fluage, c'est-à-dire à une diminution de la déformation sous contrainte. Cela correspond donc à une diminution de la fluidité de l'enrobé à 45°C par rapport à l'enrobé au bitume pur à la même température.

Le brevet US 5.820.663 revendique une composition contenant du bitume et un dope d'adhésivité qui est l'ester phosphorique d'un tensioactif alcool gras monohydrique de HLB comprise entre 8 et 18.

Le brevet US 6.261.356 revendique le mélange de bitume, d'un alcool gras en C8-C22 oxypropylé et oxyéthylé et phosphaté, et d'au moins un composant choisi parmi les huiles minérales, les alcools gras en C8-C18, les acides gras en C8-C18 et les triglycérides d'acides gras en C8-C18. Cette composition présente une adhésivité améliorée sur les granulats. Les inventeurs pensent que le dernier composant du mélange facilite l'orientation du produit phosphaté à l'interface bitume-granulats.

Des solutions ont été proposées dans la littérature pour réduire les quatre derniers défauts cités ci-dessus des procédés d'enrobage à température supérieure à 100°C.

Certaines de ces solutions concernent des procédés dont les températures de production restent supérieures à 100°C, mais on trouve des solutions techniques qui consistent à diminuer la température de fabrication de l'enrobé en deçà de 100 °C.

Dans US 6.588.974, des paraffines sont ajoutées au bitume de manière à obtenir une viscosité du bitume acceptable pour l'enrobage à plus basse température, la réduction de température étant de l'ordre de 30°C. Les paraffines utilisées jouent le rôle de fluidifiant du bitume. A température constante, cela permet d'améliorer le compactage. En même temps, elles permettent une amélioration de certaines propriétés mécaniques du mélange entre granulats et produit bitumineux, comme la résistance à l'orniérage. Cependant, l'ajout des paraffines conduit à un changement de classe de bitume et peut conduire au dépassement du seuil normalisé de teneur en paraffines des bitumes. De manière concomitante, il existe un fort risque de dégradation du comportement à froid de l'enrobé, par augmentation de sa fragilité, c'est-à-dire par baisse de l'énergie de fracture lors d'un retrait empêché et par augmentation de la température de fracture. De plus, si la température de compactage est inférieure à la température de cristallisation des paraffines au sein du bitume, le compactage est beaucoup moins efficace.

Dans US 4.371.400, il est décrit l'utilisation d'une zéolithe pour améliorer la fluidité à chaud d'un enrobé bitumineux à très faible teneur en vide, tout en améliorant la résistance à l'enfoncement à 22 et 40°C.

Dans les demandes US 2004/0033308 et US 2005/0076810, il est décrit l'utilisation de zéolithe, en particulier la zéolithe A, dans la production d'enrobé à chaud, ce qui permet de réduire les températures d'au moins 30°C tout en conservant un comportement normal en aval de l'étape de malaxage en centrale. Cependant ce procédé n'est pas exempt de défauts : un tel procédé nécessite la présence d'un silo de stockage ainsi qu'un système d'ajout de la zéolithe. De plus, l'utilisation de zéolithe à un dosage d'au moins 0,2 % par rapport aux granulats tel que préconisé dans ces deux demandes de brevet représente un coût supplémentaire non négligeable.

Dans la demande WO 2005/100480, il est décrit l'utilisation combinée de zéolithe et de cires dans la production d'asphaltes coulés à basse température. Le procédé décrit présente non seulement l'inconvénient de nécessiter le stockage, la manipulation et le surcoût dû à la zéolithe mais aussi celui supplémentaire dû à l'utilisation de cires.

Dans WO 97/20890, est décrit un procédé de fabrication d'enrobés bitumineux pour lequel le mélange est effectué en deux temps. Dans un premier temps les granulats sont enrobés avec un bitume très mou anhydre, la température du mélange obtenu étant comprise entre 80 et 115°C. Dans un deuxième temps, est ajoutée de la poudre de bitume dur à une température inférieure à 50°C. Outre les modifications nécessaires à apporter aux installations industrielles existantes pour pouvoir manipuler et ajouter la poudre de bitume, ce procédé a l'inconvénient de nécessiter du temps pour obtenir une bonne cohésion.

Dans EP 1.263.885 B1, dans un premier temps, les granulats à 130°C sont enrobés avec un liant mou anhydre à 120 °C, puis on ajoute, sous forme de mousse, du bitume dur et de la vapeur d'eau dans le malaxeur. L'enrobé obtenu est ensuite mis en œuvre entre 70 et 100°C. Ce procédé nécessite également du temps pour obtenir une bonne cohésion. De plus la pénétrabilité résiduelle obtenue après mélange entre les deux bitumes rend ce procédé inadéquat pour les pays tempérés ou chauds.

Dans EP 1 469 038 A1, les températures des différentes fractions granulaires injectés dans le malaxeur peuvent être différentes : dans un premier temps, les gros granulats sont enrobés avec tout le bitume à une température supérieure à 130°C, puis on injecte du sable humide non chauffé dans la centrale de malaxage, ce qui a l'avantage de limiter la consommation d'énergie. Au cours de la vaporisation de l'eau, on assure l'enrobage des éléments fins et de l'eau reste présente au sein de l'enrobé. L'enrobé se situe en sortie de centrale de malaxage à une température comprise entre 60 et 100°C. Une variante proposée consiste à chauffer à 200°C les gros granulats puis à les enrober avec tout le bitume et à injecter le sable humide non chauffé. Dans ce cas, l'eau est complètement éliminée et l'enrobage du sable est assuré par sa vaporisation. Dans la première variante, on cherche à maîtriser l'enrobage du sable par la vaporisation de son eau à l'état liquide initialement, ce qui a l'inconvénient d'être un phénomène fortement dépendant de la teneur en eau. De plus la fluidité de l'enrobé ainsi produit est moins bonne que celle d'un enrobé à chaud de référence. Dans la seconde variante, on ne chauffe pas le sable, mais on le sèche au sein de la centrale de malaxage, par transfert de chaleur présente préalablement dans les gros granulats. A température constante d'enrobé en sortie de centrale, la quantité de chaleur nécessaire à l'obtention d'un enrobé anhydre selon cette demande de brevet est donc très proche de celle nécessaire à l'obtention d'un enrobé de référence.

Dans EP 1.323.867, on facilite l'enrobage de granulats froids par du bitume chaud en pré-traitant les granulats avec une émulsion aqueuse de fluxant et de dope d'adhésivité et en fluxant le bitume. L'utilisation de fluxant pose le problème de la cinétique de montée en cohésion qui est plus lente que celle obtenue par refroidissement dans le cadre d'une fabrication selon les procédés de référence.

On constate ainsi que les solutions proposées ci-dessus pour limiter la température de fabrication dans les procédés de fabrication à chaud présentent au moins l'un des inconvénient suivants pour pouvoir fonctionner efficacement :
- nécessité d'adapter et modifier fortement l'unité industrielle de production
- et/ou perte de certaines des propriétés finales de l'enrobé telles que robustesse, fluidité, cohésion, augmentation de la fragilité à froid.

Des solutions ont également été proposées pour réduire les défauts des enrobés coulés à froid obtenus à partir d'émulsions de bitume non naphténique, telle que par exemple l'acidification du bitume à l'aide d'acides carboxyliques gras comportant des chaînes carbonées possédant au moins huit atomes de carbone. Cependant pour ces solutions, bien qu'améliorant la montée en cohésion au jeune âge de l'enrobé coulé à froid utilisant une émulsion au bitume non naphténique dopé par rapport à l'enrobé coulé à froid utilisant une émulsion au bitume non napthénique non traité, la montée en cohésion est encore insuffisante par rapport à celle obtenue avec le même enrobé coulé à froid obtenu avec une émulsion au bitume naphténique.

### Exposé de l'invention

La présente invention propose des produits bitumineux (anhydres) et mélanges de ces produits bitumineux avec des granulats utilisables notamment dans le domaine de l'étanchéité, de la construction et de l'entretien de tapis routiers, de trottoirs et de pistes d'aviation.

Les produits bitumineux selon l'invention sont caractérisés en ce qu'ils contiennent au moins un additif A à D de la liste suivante :
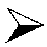 additif A : comprenant au moins un copolymère oxyde d'éthylène - oxyde de propylène, statistique ou à blocs, de masse molaire comprise entre 500 g/mol et 20.000 g/mol, de ratio massique oxyde d'éthylène sur (oxyde d'éthylène + oxyde de propylène) compris entre 1% et 70%, de formule chimique brute pour le copolymère statistique HO-(CH₂CH₂O)ₐ₋(CH₂CH(CH₃)O)_{b}-H, le ratio massique oxyde d'éthylène sur (oxyde d'éthylène + oxyde de propylène) 44a/(44a+58b) étant compris entre 0,01 et 0,7, la somme 44a+58b+18 représentant la masse molaire du copolymère étant comprise entre 500 et 20.000, de formule chimique pour le copolymère bloc HO-(CH₂CH₂O)_{c}-(CH₂CH(CH₃)O)_{d}-(CH₂CH₂O)ₑ-H ou HO-(CH₂CH₂O)_{c+e}-(CH₂CH(CH₃)O)_{d}-OH, le ratio massique oxyde d'éthylène sur (oxyde d'éthylène + oxyde de propylène) 44(c+e)/(44(c+e)+58d) étant compris entre 0,01 et 0,7, la somme 44(c+e)+58d+18 représentant la masse molaire du copolymère étant comprise entre 500 et 20.000, dont le dosage global en additif(s) A ramené à la tonne de produit bitumineux est compris entre 0,1 et 9, de préférence 8 et avantageusement 6 kg. De manière surprenante, on constate que les enrobés contenant un ou plusieurs additifs A présentent une amélioration de fluidité à température constante.
◆ additif B : mélange d'au moins un additif A tel que défini ci-dessus et d'au moins un produit A1 de formule chimique (R-O-(CH₂CH(CH₃)O)ₐ-(CH₂CH₂O)_{b})_{c}P(=O)-OH_{d} où P est l'atome de phosphore, c compris entre 1 et 2, c+d égal à 3, a compris entre 0 et 10, b compris entre 0 et 6 et R représentant une chaîne hydrocarbonée possédant 6 à 30 atomes de carbone, le dosage en additif(s) A ramené à la tonne de produit bitumineux étant compris entre 0,05 et 9, de préférence 8 et avantageusement 6 kg, le dosage global en additif(s) A1 ramené à la tonne de produit bitumineux étant de préférence compris entre 0,05 et 10 kg et les proportions respectives des produits A et A1 étant de préférence comprises entre 90-10 et 10-90. De manière surprenante, on constate que les enrobés contenant un ou plusieurs additifs B présentent une amélioration de fluidité à température constante.
◆ additif C : mélange d'au moins soit un additif A ou d'au moins soit un additif A1 ou d'au moins soit un additif B tels que définis ci-dessus et d'au moins un produit A2, le produit A2 étant choisi parmi un ou plusieurs des produits A21 à A29 suivants :
   - le produit A21, produit de la réaction de (di)alk(én)ylphénols sur aldéhydes, les aldéhydes comportant de 1 à 10 atomes de carbone et plus particulièrement de 1 à 5 atomes de carbone, suivie d'une (poly)oxyéthylation et/ou (poly)oxypropylation, les groupements alk(én)yle ayant entre 1 et 50 atomes de carbone et de préférence entre 2 et 20 atomes de carbone et pouvant être identiques ou différents dans le cas de dialk(én)ylphénols, la partie construite par (poly)oxyéthylation et/ou (poly)oxypropylation ayant une masse molaire supérieure ou égale à 45g/mol et inférieure ou égale à 20.000g/mol , le nombre de motifs phénoliques du produit A variant entre 3 et 50 ; le produit A21 peut être obtenu de manière connue en utilisant une catalyse acide ou basique, et être utilisé directement ou après neutralisation du catalyseur,
   - le produit A22 copolymère 2,2-bis(4-hydroxyphenyl)propane-epichlorohydrine (poly)oxyéthylé et/ou (poly)oxypropylé, la partie construite par (poly)oxyéthylation et/ou (poly)oxypropylation ayant une masse molaire supérieure ou égale à 45g/mol et inférieure ou égale à 20.000g/mol,
   - le produit A23 copolymère bis(4-hydroxyphenyl)éthane-epichlorohydrine (poly)oxyéthylé et/ou (poly)oxypropylé, la partie construite par (poly)oxyéthylation et/ou (poly)oxypropylation ayant une masse molaire supérieure ou égale à 45 g/mol et inférieure ou égale à 20.000g/mol,
   - le produit A24 copolymère bis(4-hydroxyphenyl)méthane-épichlorohydrine (poly)oxyéthylé et/ou (poly)oxypropylé, la partie construite par (poly)oxyéthylation et/ou (poly)oxypropylation ayant une masse molaire supérieure ou égale à 45 g/mol et inférieure ou égale à 20 000g/mol,
   - le produit A25 produit de la (poly)oxyéthylation et/ou (poly)oxypropylation d'un acide alkyldicarboxylique ou mélange d'acides alkyldicarboxyliques, les groupes alkyl ayant entre 1 et 20 atomes de carbone et préférentiellement entre 1 et 10, l'ensemble des parties construites par (poly)oxyéthylation et/ou (poly)oxypropylation ayant une masse molaire supérieure à 100 g/mol et inférieure ou égale à 20.000 g/mol,
   - le produit A26, produit de la (poly)oxyéthylation et/ou (poly)oxypropylation d'un acide gras dont le nombre d'atomes de carbone est compris entre 10 et 30, et plus particulièrement sur l'acide gras de tall oil, la partie construite par (poly)oxyéthylation et/ou (poly)oxypropylation ayant une masse molaire supérieure à 100g/mol et inférieure ou égale à 20 000g/mol,
   - le produit A27 produit de la réaction entre le produit A21 et le mélange des produits A25 et A26,
   - le produit A28, sel d'acide alk(én)yl(aryl) sulfonique et d'alk(én)yl(aryl)amine, les motifs alk(én)yl(aryl)e comportant un nombre d'atome de carbone compris entre 6 et 30, et plus particulièrement le sel d'acide dodécylbenzènesulfonique et d'amine de suif, ainsi que le sel d'acide dodécylbenzènesulfonique et de cyclohéxylamine,
   - le produit A29, sel d'acide alk(én)yl(aryl) sulfonique et de morpholine ou pyrazine ou pyrazoline ou pyrazolone ou pyridine ou pyridone ou pyrimidine ou pyrrole ou pyrrolidine ou pyyrolidone ou pyrroline ou toluidine ou imidazole ou indol ou indoline ou oxindole, les motifs alk(én)yl(aryl) comportant un nombre d'atome de carbone compris entre 6 et 30, et plus particulièrement le sel d'acide dodécylbenzènesulfonique et de morpholine.

Le dosage en produit(s) A1 ou B ramené à la tonne de produit bitumineux est de préférence compris entre 0,05 et 10 kg, le dosage en produit(s) A ramené à la tonne de produit bitumineux étant compris entre 0,05 et 9, de préférence 8 et avantageusement 6 kg, et le dosage en produit(s) A2 ramené à la tonne de produit bitumineux de préférence compris entre 0,05 et 10 kg. De manière surprenante, on constate qu'il existe une synergie entre le produit A ou le produit A1 ou le produit B et le produit A2 dans les proportions décrites ci-dessus pour ce qui concerne l'amélioration de la fluidité des mélanges entre produits bitumineux et granulats.
◆ additif D : mélange d'au moins soit un produit A ou d'au moins soit un produit B ou d'au moins soit un produit C tels que définis ci-dessus et d'un ou plusieurs dopes d'adhésivité, le dosage en produit(s) A ramené à la tonne de produit bitumineux étant compris entre 0,05 et 9, de préférence 8 et avantageusement 6 kg, le dosage en produit(s) B ou C ramené à la tonne de produit bitumineux étant compris entre 0,1 et 10 kg, le dosage en dope(s) d'adhésivité ramené à la tonne de produit bitumineux étant de préférence compris entre 0,05 et 10 kg, le ratio massique entre produit(s) A, B ou C et dope(s) d'adhésivité étant de préférence compris entre 90-10 et 10-90, et avantageusement compris entre 90-10 et 40-60. Par dopes d'adhésivité, on entend, les produits présentant une activité interfaciale et ajoutés dans le produit bitumineux pour améliorer la qualité d'enrobage du granulat par le produit bitumineux et/ou améliorer l'adhésivité du produit bitumineux sur le granulat et/ou améliorer les performances mécaniques du mélange entre le produit bitumineux et le granulat. On peut citer comme exemples non limitatifs de dopes d'adhésivité les alkylamidopolyamines, les alkylimidazolines et alkylimidazopolyamines, produits de réaction entre polyamines et acides carboxyliques gras, également les alkylpolyamines à chaînes grasses, également les produits de réaction entre acides carboxyliques gras ou huile végétale et diéthanolamine, suivie de la réaction avec des polyamines, également les acides carboxyliques gras. Les polyamines peuvent être, à titre d'exemples non limitatifs, la diméthylaminopropylamine, la N-aminoéthylpipérazine, la diéthylènetriamine, la triéthylènetétramine, la tétraéthylènepentamine.

La présente invention concerne également le procédé de préparation des produits bitumineux auxquels sont ajoutés au moins un des additifs définis précédemment. La présente invention propose d'ajouter l'additif A à D décrit ci-dessus dans le produit bitumineux à un moment quelconque de la chaîne logistique depuis la raffinerie jusqu'au site du mélange du produit bitumineux et des granulats.

Pour la préparation de produits bitumineux selon l'invention auxquels sont ajoutés un additif A à D constitué de plusieurs composants, on ne sortirait pas du cadre de la présente invention en ajoutant successivement les composants de l'additif avec le produit bitumineux pour réaliser le mélange final, ou en mélangeant préalablement ces composants entre eux avant de les mélanger avec le produit bitumineux.

Dans le cadre de la présente invention, les additifs cités ci-dessus peuvent être utilisés purs ou dilués à l'aide de solvants carbonés comme les solvants pétroliers et/ou les huiles végétales lors de leur mélange avec les produits bitumineux.

Lors de l'additivation, la température du produit bitumineux est en général comprise entre 100 et 250°C, selon la classe de pénétrabilité du produit bitumineux et selon sa température de ramollissement bille-anneau, et la température de l'additif est en général comprise entre la température ambiante et 200°C, en tenant compte pour des raisons évidentes de sécurité du point éclair de l'additif. Dans le cas où l'additif est maintenu chaud, on peut avantageusement le maintenir sous agitation pour éviter les points chauds et froids. L'additif peut être ajouté à l'état solide, soit par une opération mécanique manuelle, soit par l'utilisation d'un système de dosage adapté aux produits solides. L'additif peut également être ajouté à l'état liquide soit par versement dans une cuve contenant le produit bitumineux auquel cas une recirculation sur une durée en général d'au 15 minutes au minimum est nécessaire avant utilisation, soit par ajout sur un tuyau transportant le produit bitumineux. On peut équiper la tuyauterie transportant le produit bitumineux en aval du point d'injection d'un mélangeur statique pour faciliter la dispersion de l'additif. Dans le cas de l'ajout de l'additif selon l'invention dans une cuve contenant le(s) produit(s) bitumineux, le produit bitumineux additivé est stockable de la même manière que le(s) produit(s) bitumineux non additivé, sans présenter d'inconvénient supplémentaire à cette étape du procédé.

La présente invention concerne également le procédé de préparation des enrobés obtenus à partir de mélange des produits bitumineux selon l'invention avec des granulats ainsi que les revêtements et tapis routiers préparés à partir de ces enrobés. Selon l'invention, le mélange entre granulats et produit bitumineux est caractérisé en ce qu'il est effectué à des températures des fractions granulaires qui peuvent être différentes, permettant la production d'un enrobé à une température comprise entre 60 et 200°C, et préférentiellement entre 100 et 200°C. Lors du mélange, la température du produit bitumineux est comprise entre 100 et 250°C. Ces températures dépendent d'une part de la classe de pénétrabilité du produit bitumineux : plus celle-ci est basse et plus le produit bitumineux et les granulats doivent être chauds. Ces températures dépendent d'autre part de la température de ramollissement bille-anneau du produit bitumineux : plus celle-ci est élevée et plus le produit bitumineux et les granulats doivent être chauds. L'additif peut également être pulvérisé sur le granulat chauffé, avant ou pendant l'ajout du produit bitumineux.

Dans le domaine de l'étanchéité, la construction et l'entretien de tapis routiers, de trottoirs et pistes d'aviation où l'on utilise des mélanges de produits bitumineux non naphténiques anhydres et de granulats, l'additivation du produit bitumineux non naphténique ou de son mélange avec des granulats à l'aide d'au moins un des additifs A à D définis ci-dessus et dosés selon l'additif entre 0,1 et 20 kg ou 0,1 et 10 kg par tonne de produit bitumineux non napthénique, permet de manière surprenante d'améliorer la fluidité de l'enrobé à température constante par rapport à l'enrobé au bitume non naphténique non additivé et de se rapprocher voire même d'atteindre la fluidité de l'enrobé au bitume naphténique à cette même température. Ainsi les propriétés obtenues en aval de l'enrobé au bitume non naphténique additivé comme la cohésion s'en trouvent positivement impactées.

Toujours dans le domaine de l'étanchéité, la construction et l'entretien de tapis routiers, de trottoirs, de pistes cyclables, d'aires de stationnement et de pistes d'aviation où l'on utilise des mélanges de produits bitumineux anhydres et de granulats, l'additivation du produit bitumineux ou de son mélange avec des granulats à l'aide d'additifs chimiques décrits plus haut dosés selon l'additif entre 0,1 et 20 kg ou 0,1 et 10 kg par tonne de produit bitumineux permet de baisser de manière surprenante la température de production des mélanges de granulats et de produit bitumineux d'une amplitude de 20 à 40 °C, la température du mélange entre granulats et produit bitumineux lors de l'épandage d'une amplitude de 10 à 40°C et la température du mélange entre granulats et produit bitumineux à cœur au cours du compactage, quand il a lieu, d'une amplitude pouvant aller jusqu'à 50°C, sans dégrader les propriétés normalisées du produit bitumineux et du mélange entre produit bitumineux et granulats, tout en conservant une conduite du procédé, depuis le transport jusqu'au compactage éventuel conforme à l'état de l'art, en dehors des considérations sur les températures ci-dessus décrites. Ces diminutions de températures s'entendent par rapport à la référence de l'état de l'art. En France, la norme française NF P 98-150 de décembre 1992 constitue la référence sur l'exécution des corps de chaussées, couches de liaison et couche de roulement en enrobés hydrocarbonés, la norme française NF P 98-130 de novembre 1999 constitue la référence pour les bétons bitumineux semi-grenus et la norme française NF P 98-138 de novembre 1999 constitue la référence pour les graves bitume. A titre d'exemple pour un bitume de pénétrabilité 35/50, ces normes indiquent que les températures limites acceptables sont de 150 à 170°C pour l'enrobage et que pour l'épandage, la température minimale de l'enrobé est de 130°C.

Les avantages de l'invention par rapport à l'état de l'art sont listés ci-dessous et incluent notamment la limitation des quatre défauts cités plus haut lors de la mise en œuvre des procédés de fabrication d'enrobés à des températures supérieures à 100 °C :
- diminution de la consommation de combustible fossile
- diminution de l'émission de GES et de poussières,
- diminution de la pénibilité des travaux lors des opérations de répandage et de compactage
- sécurisation des opérations d'épandage et de compactage de l'enrobé vis-à-vis des conditions météorologiques,
- allongement du délai pendant lequel on peut utiliser l'enrobé après sa préparation
- dans le cas où deux bandes d'enrobé sont déposées successivement et côte à côte, le joint les séparant est plus résistant et mieux fermé,
- le retrait thermique est plus limité ainsi que le risque de fissuration,
- l'oxydation du produit bitumineux est plus limitée, ce qui augmente la durée de vie du mélange produit bitumineux/granulats et facilite son recyclage.

La présente invention propose également des émulsions aqueuses cationiques de produits bitumineux ainsi que les mélanges de ces émulsions aqueuses cationiques de produits bitumineux avec des granulats utilisables notamment dans le domaine de l'entretien des tapis routiers, de trottoirs, de pistes cyclables, d'aires de stationnement et de pistes d'aviation, caractérisés en ce que les produits bitumineux contiennent au moins un additif de la liste suivante :
∘ additif A : tel que défini précédemment dont le dosage ramené à la tonne de produit bitumineux présent dans l'émulsion est de préférence compris entre 0,1 et 10 kg. Il est surprenant de constater une amélioration de la montée en cohésion de l'enrobé coulé à froid obtenu avec une émulsion à base de bitume additivé avec au moins un additif A par rapport à l'enrobé coulé à froid avec une émulsion au bitume non additivé.
∘ additif D1 : mélange d'au moins un produit A et d'un ou plusieurs dopes d'adhésivité tels que définis précédemment, le dosage en produit(s) A ramené à la tonne de produit bitumineux présent dans l'émulsion étant compris de préférence entre 0,1 et 10 kg, le dosage en dope(s) d'adhésivité ramené à la tonne de produit bitumineux présent dans l'émulsion étant compris entre 0,05 et 10 kg, le ratio massique entre produit(s) A et dope(s) d'adhésivité étant de préférence compris entre 95-5 et 10-90, et avantageusement compris entre 95-5 et 50-50.

On entend par émulsions aqueuses cationiques les émulsions à phase continue aqueuse et dont les particules de phase dispersée sont chargées positivement, donc cationiques.

Les émulsions cationiques selon l'invention (i.e qui contiennent au moins un émulsifiant cationique) peuvent être préparées par mise en contact de l'additif A ou D avec le produit bitumineux à une température comprise dans la gamme de températures allant de 100 à 200°C et de préférence allant de 120 à 180°C préalablement à l'émulsification. L'émulsification est réalisée par la mise en contact de la phase aqueuse émulsifiante avec le produit bitumineux additivé défini ci-dessus, dans un outil d'émulsification travaillant de manière continue ou discontinue. On entend par phase aqueuse émulsifiante le mélange d'eau, d'émulsifiant(s) cationiques et éventuellement d'acides organiques ou minéraux.

Des exemples non limitatifs d'émulsifiants cationiques permettant d'obtenir de telles émulsions sont les alkylpolyamines, les alkylamidopolyamines, les alkylamidoimidazolines, les alkylmonoamines quaternaires, les alkylpolyamines quaternaires, les dérivés aminés de la lignine obtenus par amination directe ou par la réaction de Mannich ou par réaction entre la lignine de Kraft et la glycidylamine, et les mélanges qui en résultent.

Les additifs cités ci-dessus peuvent être utilisés purs ou dilués à l'aide de solvants carbonés comme les solvants pétroliers et/ou les huiles végétales lors de la préparation de l'émulsion aqueuse cationique selon l'invention.

Dans le domaine de la construction de tapis routiers ou piétonniers en enrobé coulé à froid utilisant les émulsions cationiques, l'additivation du produit bitumineux non naphténique à l'aide d'additifs chimiques décrits ci-dessus et dosés selon les cas entre 0,1 et 20 kg ou 0,1 et 10 kg par tonne de produit bitumineux avant sa mise en émulsion permet d'augmenter fortement la cohésion de l'enrobé coulé à froid. L'additivation du bitume non naphténique ne modifie pas la réactivité de l'émulsion cationique et ne nécessite donc pas de modification de formule de l'émulsion en terme de nature et de quantité d'émulsifiant ainsi qu'en terme de nature et de quantité d'acide utilisé.

### Exemples

Dans les exemples suivants, l'additivation du bitume de pénétrabilité 35/50 est effectuée à 160 C, celle du bitume de pénétrabilité 70/100 est effectuée à 140°C, sur plaque chauffante avec agitation à 1 tr/s pendant 15 minutes.

Les mesures de pénétrabilité et de point de ramollissement bille-anneau des enrobés sont conformes aux s normes NF EN 1426 et respectivement NF EN 1427.

### Exemple 1

Un bitume dénommé TOTAL Azalt de pénétrabilité 35/50 provenant de la raffinerie de Feyzin a été additivé à l'aide des additifs suivants :
* Additif 1 (type A) : polymère de la classe des copolymères oxyde d'éthylène - oxyde de propylène bloc, de masse molaire M_{w} de l'ordre de 4500 g/mol, de ratio massique oxyde d'éthylène sur (oxyde d'éthylène + oxyde de propylène) de l'ordre de 40%, commercialisé sous le nom de Pluronic P94
* Additif 2 (type B) le mélange en proportions massique 70-30 entre le polymère de la classe des copolymères oxyde d'éthylène - oxyde de propylène bloc, de masse molaire M_{w} de l'ordre de 3400 g/mol, de ratio massique oxyde d'éthylène sur (oxyde d'éthylène + oxyde de propylène) de l'ordre de 20%, commercialisé sous le nom de Pluronic L92 et le produit A1 de formule chimique (R-O-( CH₂CH(CH₃)O)ₐ- (CH₂CH₂O)_{b})_{c}P(=O)-OH_{d} avec P l'atome de phosphore, c compris entre 1 et 2, c+d égal à 3, a égal à 0, b égal à 4 et R représentant une chaîne hydrocarbonée possédant entre 12 et 14 atomes de carbone, les proportions massiques du produit A1 en monoester de phosphate et diester de phosphate étant comprises respectivement entre 50 à 65% et 30 à 40%
*Additif 3 (type B) : le mélange en proportions massique 50-50 entre le polymère de la classe des copolymères oxyde d'éthylène - oxyde de propylène bloc, de masse molaire M_{w} de l'ordre de 3400 g/mol, de ratio massique oxyde d'éthylène sur (oxyde d'éthylène + oxyde de propylène) de l'ordre de 20%, commercialisé sous le nom de Pluronic L92 et le produit A1 de formule chimique (R -O-( CH₂CH(CH₃)O)ₐ- (CH₂CH₂O)_{b})_{c}P(=O)-OH_{d} avec P l'atome de phosphore, c compris entre 1 et 2, c+d égal à 3, a égal à 0, b égal à 4 et R représentant une chaîne hydrocarbonée possédant entre 12 et 14 atomes de carbone, les proportions massiques du produit A1 en monoester de phosphate et diester de phosphate étant comprises respectivement entre 50 à 65% et 30 à 40%
*Additif 4 (type D) : le mélange en proportions massiques 50-25-25 entre respectivement le polymère de la classe des copolymères dibloc oxyde d'éthylène - oxyde de propylène, de masse molaire M_{w} de l'ordre de 4100 g/mol, de ratio massique oxyde d'éthylène sur (oxyde d'éthylène + oxyde de propylène) de l'ordre de 3%, et respectivement le résultat de la condensation d'aminoéthylpipérazine sur une huile végétale possédant des chaînes grasses contenant de 14 à 18 atomes de carbone, avec un indice d'iode supérieur à 90, obtenue en coulant l'huile végétale sur l'aminoéthylpipérazine à 150°C pendant 2h puis en chauffant l'ensemble à 190°C pendant 1h, et respectivement une alkylamidoimidazoline obtenue par la réaction de condensation entre de l'acide carboxylique, possédant une chaîne grasse contenant de 14 à 22 atomes de carbone et un indice d'iode supérieur à 100, et un mélange de 50% de diéthylènetriamine avec 30% de triéthylènetétramine et 20% d'aminoéthylpipérazine

Les mesures de pénétrabilité et de point de ramollissement bille-anneau sont réunis dans le tableau suivant :

| N° | Nature de l'échantillon | Pénétrabilité (×0,1 mm) @ 25°C | Limites de pénétrabilité (×0,1 mm) | Point de ramollissement (°C) | Limites de point de ramollissement (°C) |
|---|---|---|---|---|---|
| 1 | Bitume pur | 38 | 35-50 | 54 | 50-58 |
| 2 | Bitume + Additif 1 (5 kg/t) | 36 | | 53 | |
| 3 | Bitume + Additif 2 (5 kg/t) | 36 | | 55 | |
| 4 | Bitume + Additif 3 (5 kg/t) | 40 | | 55 | |
| 5 | Bitume + Additif 4 (3 kg/t) | 39 | | 54 | |

### Exemple 2

Un bitume TOTAL Aqualt de pénétrabilité 70/100 provenant de la raffinerie de Donges a été additivé à l'aide des additifs suivants :
*Additif 5 (type A) : le polymère de la classe des copolymères oxyde d'éthylène - oxyde de propylène bloc, de masse molaire M_{w} de l'ordre de 3400 g/mol, de ratio massique oxyde d'éthylène sur (oxyde d'éthylène + oxyde de propylène) de l'ordre de 20%, commercialisé sous le nom de Pluronic L92
*Additif 6 (type D1) : le mélange en proportions massique 80-20 entre le polymère de la classe des copolymères oxyde d'éthylène - oxyde de propylène bloc, de masse molaire M_{w} de l'ordre de 3400 g/mol, de ratio massique oxyde d'éthylène sur (oxyde d'éthylène + oxyde de propylène) de l'ordre de 20%, commercialisé sous le nom de Pluronic L92, et le résultat de la condensation d'aminoéthylpipérazine sur une huile végétale possédant des chaînes grasses contenant de 14 à 18 atomes de carbone, avec un indice d'iode supérieur à 90, obtenue en coulant l'huile végétale sur l'aminoéthylpipérazine à 150°C pendant 2h puis en chauffant l'ensemble à 190°C pendant 1h

Additif 7 (type A) : le polymère de la classe des copolymères oxyde d'éthylène - oxyde de propylène bloc, de masse molaire M_{w} de l'ordre de 2200 g/mol, de ratio massique oxyde d'éthylène sur (oxyde d'éthylène + oxyde de propylène) de l'ordre de 20%, commercialisé sous le nom de Pluronic L62

Les mesures de pénétrabilité et de point de ramollissement bille-anneau sont réunis dans le tableau suivant :

| Nature de l'échantillon | Pénétrabilité (×0,1 mm) @ 25°C | Limites de pénétrabilité (×0,1 mm) | Point de ramollissement (°C) | Limites de point de ramollissement (°C) |
|---|---|---|---|---|
| Bitume pur | 76 | 70-100 | 51,5 | 43-51 |
| Bitume + Additif 5 (5 kg/t) | 76 | | 51,5 | |
| Bitume + Additif 6 (5 kg/t) | 74 | | 51 | |
| Bitume + Additif 7 (3 kg/t) | 77 | | 51,5 | |

### Exemple 3

Nous avons fabriqué sur une centrale fixe possédant un tambour sécheur-malaxeur, un Béton Bitumineux Semi-Grenu (BBSG) 0/10 de classe 3 en quatre planches différentes, toutes quatre possédant la formule granulaire suivante :

| | | |
|---|---|---|
| - filler calcaire | calcaire | 5% |
| - sable 0/2 | rhyolite | 34% |
| - granulats 2/6 | rhyolite | 12% |
| - granulats 6/10 | rhyolite | 49% |

Le bitume utilisé est un TOTAL Azalt 35/50, de caractéristiques suivantes : pénétrabilité à 25°C égale à 40, de densité 1,032, de point de ramollissement bille-anneau 51°C. La teneur en produit bitumineux est de 6,1 g pour 100 g de granulats. Pour les deux premières planches, le bitume a été utilisé pur. Pour la troisième planche, le bitume a été additivé avec l'additif suivant au dosage de 5 kg par tonne de bitume :
Additif 8 (type B) : le mélange en proportions massiques 70-20-10 entre respectivement le polymère de la classe des copolymères oxyde d'éthylène - oxyde de propylène bloc, de masse molaire M_{w} de l'ordre de 3400 g/mol, de ratio massique oxyde d'éthylène sur (oxyde d'éthylène + oxyde de propylène) de l'ordre de 20%, commercialisé sous le nom de Pluronic L92, et respectivement le produit A1 de formule chimique (R -O-(CH₂CH(CH₃)O)ₐ- (CH₂CH₂O)_{b})_{c}P(=O)-OH_{d} avec P l'atome de phosphore, c compris entre 1 et 2, c+d égal à 3, a égal à 0, b égal à 4 et R représentant une chaîne hydrocarbonée possédant entre 12 et 14 atomes de carbone, les proportions massiques du produit A1 en monoester de phosphate et diester de phosphate étant comprises respectivement entre 50 à 65% et 30 à 40%, et respectivement l'ester méthylique de colza.

Pour la quatrième planche, le bitume a été additivé avec l'additif suivant au dosage de 5 kg par tonne de bitume :
Additif 9 (type D) : le mélange en proportions massiques 50-25-25 entre respectivement le polymère de la classe des copolymères dibloc oxyde d'éthylène - oxyde de propylène, de masse molaire M_{w} de l'ordre de 4.100 g/mol, de ratio massique oxyde d'éthylène sur (oxyde d'éthylène + oxyde de propylène) de l'ordre de 3%, et respectivement le résultat de la condensation d'aminoéthylpipérazine sur une huile végétale possédant des chaînes grasses contenant de 14 à 18 atomes de carbone, avec un indice d'iode supérieur à 90, obtenue en coulant l'huile végétale sur l'aminoéthylpipérazine à 150°C pendant 2h puis en chauffant l'ensemble à 190°C pendant 1h, et respectivement une alkylamidoimidazoline obtenue par la réaction de condensation entre de l'acide carboxylique, possédant une chaîne grasse contenant de 14 à 22 atomes de carbone et un indice d'iode supérieur à 100, et un mélange de 50% de diéthylènetriamine avec 30% de triéthylènetétramine et 20% d'aminoéthylpipérazine.

Chaque additivation a été effectuée par le trou d'homme de la cuve de stockage du bitume dédiée. Le bitume ainsi additivé avec l'additif 8 a été utilisé après 30 minutes de recirculation dans la cuve de stockage. Le bitume ainsi additivé avec l'additif 9 a été utilisé après 2h30 minutes de recirculation dans la cuve de stockage.

Lors de la production de l'enrobé, les températures suivantes ont été respectées :
- le granulat a été chauffé à 160 °C pour la première planche et 120 °C pour les trois planches suivantes
- le bitume a dans tous les cas était utilisé à 160°C.

L'épandage a été effectué à l'aide d'un finisseur Marini MF905, dont la vitesse d'avancement était de 5 m/min et d'un compacteur Dynapac CC422, dont la vitesse d'avancement était de 3 km/h, avec une épaisseur de tapis visée en fin de compactage de 5 cm. Le nombre de passes réalisées a été de 10, sous vibrations d'amplitude 0,8 mm et de fréquence 51 Hz. Lors du compactage, les températures du BBSG suivantes ont été respectées :
- sur bitume pur, à 135°C en moyenne pour la première planche et 90°C pour la seconde planche
- sur bitume additivé à 95°C pour les troisième et quatrième planche

Ont été mesurées, suite au chantier, la masse volumique apparente au gammadensimètre selon la norme NF P 98-241-1, la masse volumique apparente par pesée hydrostatique selon la norme NF P 98-250-6 et la profondeur moyenne de texture selon la norme NF EN 13036-1. Les porosités sont calculées à partir des masses volumiques gamma corrigées par les mesures en pesée hydrostatique. Les températures du BBSG ont été mesurées à cœur.

| Nature du bitume | T granulats à la production (°C) | T BBSG à la dépose (°C) | T BBSG au compactage (°C) | Profondeur moyenne de texture (mm) | Porosité moyenne (%) | Pourcentage de mesures de porosité au-dessus du seuil de 8% |
|---|---|---|---|---|---|---|
| Bitume pur | 160 | 160 | 135 | 0,7 | 3,4 | 0 |
| Bitume pur | 120 | 120 | 90 | 0,8 | 7,9 | 40 |
| Bitume + additif 8 | 120 | 120 | 95 | 0,75 | 4,2 | 0 |
| Bitume + additif 9 | 120 | 120 | 95 | 0,8 | 5,1 | 0 |

Les profondeurs moyennes de texture sont toutes acceptables. Par rapport aux limites de porosité pour les BBSG 0/10 de classe 3 qui sont de 4 et 8%, le BBSG de référence se situe en dessous, preuve que le compactage a été trop poussé. Dans les mêmes conditions de compactage, le BBSG produit en conditions thermiques de production dégradées sans additif a une porosité moyenne qui se rapproche de la limite haute. L'écart de porosité moyenne par rapport au BBSG de référence est fortement réduit lorsque, malgré les conditions thermiques de production dégradées, on ajoute l'additif 8 ou 9 au bitume, avec un avantage à l'additif 8. La dernière colonne du tableau indique que la planche en conditions thermiques dégradées sans additif est hors norme, car au-dessus du seuil de 10%. Les planches réalisées en conditions thermiques dégradées avec l'additif 8 ou 9 respectent la norme.

### Exemple 4

Les granulats utilisés dans l'enrobé coulé à froid sont des microdiorites dont la distribution granulométrique est la suivante :

| | |
|---|---|
| 0/2 mm | 55 % |
| 2/6 mm | 45 %, |

qui entre dans un fuseau ISSA de type III et dont la teneur en filler est de 10 % en poids.

La teneur en eau d'ajout est de 10 g d'eau pour 100 g de granulats.

La teneur en ciment CEMII 32.5R est de 1 g pour 100 g de granulats.

Les émulsions bitumeuses selon l'invention contiennent :
* 61 % de bitume Total Aqualt de pénétrabilité 70/100,
* 10 kg de Polyram® S (acidifié à l'acide chlorhydrique de telle manière que le pH du savon soit de 2) pour 1.000 kg d'eau + bitume additivé + émulsifiant Polyram® S+ acide. La teneur en bitume est de 7 g pour 100 g de granulats. Les additifs ajoutés au bitume à hauteur de 3 kg par tonne de bitume sont l'additif 1 de l'exemple 1 et les additifs 5 et 6 de l'exemple 2.

A titre comparatif, on prépare une émulsion qui se distingue de la précédente en ce qu'elle ne contient aucun additif dans le bitume Total Aqualt 70/100.

On mélange les granulats humidifiés avec l'eau d'ajout et l'une des émulsions ci-dessus à l'aide d'une spatule dans une gamelle jusqu'à la rupture pour déterminer le temps de déstabilisation mécanique du mélange de granulats, d'eau et d'émulsion de bitume, temps que l'on juge par l'augmentation de couple ressentie lors du malaxage. On mélange les granulats humidifiés avec l'eau d'ajout et l'une des émulsions ci-dessus à l'aide d'une spatule dans une gamelle pendant 40 s avant de couler dans les secondes qui suivent le mélange dans un moule de 10 mm de hauteur placé sur un support d'étanchéité. Au bout de 3 min on enlève le moule sans déformer l'enrobé et on laisse l'enrobé coulé à froid mûrir à 20°C +/- 2°C pendant un certain temps (30 minutes ou 60 minutes ou 90 minutes) puis on mesure le couple maximal selon le test Bénédict sous une pression de 2bar.

| Formule du bitume | Temps de déstabilisation | Cohésion en kg.cm à 30min | Cohésion en kg.cm à 60min | Cohésion en kg.cm à 90min |
|---|---|---|---|---|
| Bitume pur | 90s | 13 | 15 | 15 |
| Bitume + additif 1 | 95s | 13 | 17 | 18 |
| Bitume + additif 5 | 85s | 19 | 21 | 23 |
| Bitume + additif 6 | 90s | 20 | 22 | 23 |

On constate que l'additivation du bitume ne modifie que très peu le temps de déstabilisation de l'enrobé coulé à froid. Sans additif dans le bitume, la déstabilisation n'est pas franche et l'eau qui s'échappe de l'enrobé est chargée de particules noires. La cohésion n'atteint pas le seuil de 20 kg.cm, même après 90 minutes de mûrissement. Pour ce couple précis granulats - bitume, il en va de même avec l'additif 1. L'additif 5 ou 6 présent dans le bitume permet d'augmenter la cohésion au jeune âge et rend la déstabilisation de l'enrobé qualitativement bonne.

## Revendications

1. Produits bitumineux anhydres, **caractérisés en ce qu'**ils contiennent au moins un additif de la liste suivante :
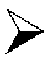 additif A : copolymère(s) oxyde d'éthylène - oxyde de propylène, statistique ou à blocs, de masse molaire comprise entre 500 g/mol et 20.000 g/mol, de ratio massique oxyde d'éthylène sur (oxyde d'éthylène + oxyde de propylène) compris entre 1% et 70%, de formule chimique brute pour le copolymère statistique HO-(CH₂CH₂O)ₐ-(CH₂CH(CH₃)O)_{b}-H, le ratio massique oxyde d'éthylène sur (oxyde d'éthylène + oxyde de propylène) 44a/(44a+58b) étant compris entre 0,01 et 0,7, la somme 44a+58b+18 étant comprise entre 500 et 20.000, de formule chimique pour le copolymère bloc HO-(CH₂CH₂O)c-(CH₂CH(CH₃)O)_{d}-(CH₂CH₂O)ₑ-H ou HO-(CH₂CH₂O)_{c+e}-(CH₂CH(CH₃)O)_{d}-H, le ratio massique oxyde d'éthylène sur (oxyde d'éthylène + oxyde de propylène) 44(c+e)/(44(c+e)+58d) étant compris entre 0,01 et 0,7, la somme 44(c+e)+58d+18 étant comprise entre 500 et 20.000, seul ou en mélange avec d'autres membres de cette classe, et dont le dosage global ramené à la tonne de produit bitumineux est compris entre 0,1 et 9, de préférence 8 et avantageusement 6 kg ;
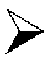 additif B : mélange d'au moins un produit A et d'au moins un produit A1 de formule chimique (R-O-( CH₂CH(CH₃)O)ₐ- (CH₂CH₂O)_{b})_{c}P(=O)-OH_{d} avec P l'atome de phosphore, c compris entre 1 et 2, c+d égal à 3, a compris entre 0 et 10, b compris entre 0 et 6 et R représentant une chaîne hydrocarbonée possédant 6 à 30 atomes de carbone, le dosage en produit(s) A ramené à la tonne de produit bitumineux étant compris entre 0,05 et 9, de préférence 8 et avantageusement 6 kg, le dosage global en additif A1 ramené à la tonne de produit bitumineux étant de préférence compris entre 0,05 et 10 kg et les proportions respectives des deux produits étant comprises entre 90-10 et 10-90,
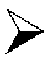 additif C : mélange d'au moins soit un produit A ou d'au moins soit un produit A1 ou d'au moins soit un produit B et d'au moins un produit A2, à un dosage en produit(s) A ramené à la tonne de produit bitumineux compris entre 0,05 et 9, de préférence 8 et avantageusement 6 kg, à un dosage de produit(s) A1 ou B ramené à la tonne de produit bitumineux de préférence compris entre 0,05 et 10 kg, à un dosage de produit(s) A2 ramené à la tonne de produit bitumineux de préférence compris entre 0,05 et 10 kg, le produit A2 étant choisi parmi :
• le produit A21, produit de la réaction de (di)alk(én)ylphénols sur aldéhydes, les aldéhydes comportant de 1 à 10 atomes de carbone et plus particulièrement de 1 à 5 atomes de carbone, suivie d'une (poly)oxyéthylation et/ou (poly)oxypropylation, les groupements alk(én)yl ayant entre 1 et 50 atomes de carbone et de préférence entre 2 et 20 atomes de carbone et pouvant être identiques ou différents dans le cas de dialk(én)ylphénols, la partie construite par (poly)oxyéthylation et/ou (poly)oxypropylation ayant une masse molaire supérieure ou égale à 45g/mol et inférieure à 20 000g/mol, le nombre de motifs phénoliques du produit A variant entre 3 et 50,
• le produit A22 copolymère 2,2-bis(4-hydroxyphenyl)propane-epichlorohydrine (poly)oxyéthylé et/ou (poly)oxypropylé, la partie construite par (poly)oxyéthylation et/ou (poly)oxypropylation ayant une masse molaire supérieure ou égale à 45g/mol et inférieure à 20 000g/mol,
• le produit A23 copolymère bis(4-hydroxyphenyl)éthane-epichlorohydrine (poly)oxyéthylé et/ou (poly)oxypropylé, la partie construite par (poly)oxyéthylation et/ou (poly)oxypropylation ayant une masse molaire supérieure ou égale à 45 g/mol et inférieure à 20 000g/mol,
• le produit A24 copolymère bis(4-hydroxyphenyl)méthane-épichlorohydrine (poly)oxyéthylé et/ou (poly)oxypropylé, la partie construite par (poly)oxyéthylation et/ou (poly)oxypropylation ayant une masse molaire supérieure ou égale à 45 g/mol et inférieure à 20 000g/mol,
• le produit A25 produit de la (poly)oxyéthylation et/ou (poly)oxypropylation d'un acide alkyldicarboxylique ou mélange d'acides alkyldicarboxyliques, les groupes alkyl ayant entre 1 et 20 atomes de carbone et préférentiellement entre 1 et 10, l'ensemble des parties construites par (poly)oxyéthylation et/ou (poly)oxypropylation ayant une masse molaire supérieure à 100g/mol et inférieure à 20 000g/mol,
• le produit A26, produit de la (poly)oxyéthylation et/ou (poly)oxypropylation d'un acide gras dont le nombre d'atomes de carbone est compris entre 10 et 30, et plus particulièrement sur l'acide gras de tall oil, la partie construite par (poly)oxyéthylation et/ou (poly)oxypropylation ayant une masse molaire supérieure à 100g/mol et inférieure à 20 000g/mol,
• le produit A27 produit de la réaction entre le produit A21 et le mélange des produits A25 et A26,
• le produit A28, sel d'acide alk(én)yl(aryl) sulfonique et d'alk(én)yl(aryl)amine, les motifs alk(én)yl(aryl) comportant un nombre d'atome de carbone compris entre 6 et 30, et plus particulièrement le sel d'acide dodécylbenzènesulfonique et d'amine de suif, ainsi que le sel d'acide dodécylbenzènesulfonique et de cyclohéxylamine,
• et/ou le produit A29, sel d'acide alk(én)yl(aryl) sulfonique et de morpholine ou pyrazine ou pyrazoline ou pyrazolone ou pyridine ou pyridone ou pyrimidine ou pyrrole ou pyrrolidine ou pyyrolidone ou pyrroline ou toluidine ou imidazole ou indol ou indoline ou oxindole, les motifs alk(én)yl(aryl) comportant un nombre d'atome de carbone compris entre 6 et 30, et plus particulièrement le sel d'acide dodécylbenzènesulfonique et de morpholine,
> additif D, mélange d'au moins un produit A ou d'au moins un produit B ou d'au moins un produit C et un ou plusieurs dopes d'adhésivité, le dosage en produit(s) B ou C ramené à la tonne de produit bitumineux étant compris entre 0,1 et 10 kg, le dosage en produit(s) A ramené à la tonne de produit bitumineux étant compris entre 0,05 et 9, de préférence 8 et avantageusement 6 kg, le dosage en dope(s) d'adhésivité ramené à la tonne de produit bitumineux étant de préférence compris entre 0,05 et 10 kg, le ratio massique entre le produit A, B ou C et le(s) dope(s) d'adhésivité étant de préférence compris entre 90-10 et 10-90, et avantageusement compris entre 90-10 et 40-60.

2. Procédé de préparation du produit bitumineux selon la revendication 1, **caractérisé en ce qu'**il comprend la mise en contact du ou des composants de l'additif avec le produit bitumineux à une température comprise dans la gamme de températures allant de 100 à 250°C.

3. Mélanges des produits bitumineux tels que définis à la revendication 1 avec des granulats sous forme d'enrobés.

4. Procédé de préparation des enrobés selon la revendication 3, **caractérisé en ce qu'**on pratique un malaxage du produit bitumineux et de granulats et **en ce que** les températures des fractions granulaires peuvent être différentes et permettre la production d'un enrobé à une température comprise entre 60 et 200°C, et de préférence comprise entre 100 et 200°C.

5. Procédé de préparation du mélange entre produit bitumineux et granulats selon la revendication 4, **caractérisé en ce que** le malaxage entre produit bitumineux et granulats est effectué à une température du produit bitumineux comprise dans la gamme de températures allant de 100 à 250°C.

6. Procédé de préparation du mélange entre produit bitumineux et granulats selon la revendication 4 à 5, **caractérisé en ce que** l'additif selon la revendication 1 est ajouté dans le malaxeur avant ou pendant l'ajout du produit bitumineux.

7. Utilisation des enrobés de la revendication 4 pour l'étanchéité, la construction et l'entretien de tapis routiers, trottoirs, pistes cyclables, aires de stationnement et pistes d'aviation.

8. Procédé de préparation d'émulsions aqueuses cationiques de produit bitumineux anhydre selon la revendication 1 contenant au moins un additif de la liste suivante :
> additif A : copolymère(s) oxyde d'éthylène - oxyde de propylène, statistique ou bloc, de masse molaire comprise entre 500 g/mol et 20.000 g/mol, de ratio massique oxyde d'éthylène sur (oxyde d'éthylène + oxyde de propylène) compris entre 1% et 70%, de formule chimique brute pour le copolymère statistique HO-(CH₂CH₂O)ₐ-(CH₂CH(CH₃)O)_{b}-H, le ratio massique oxyde d'éthylène sur (oxyde d'éthylène + oxyde de propylène) 44a/(44a+58b) étant compris entre 0,01 et 0,7, la somme 44a+58b+18 étant comprise entre 500 et 20.000, de formule chimique pour le copolymère bloc HO-(CH₂CH₂O)_{c}-(CH₂CH(CH₃)O)_{d}-(CH₂CH₂O)ₑ-H ou HO-(CH₂CH₂O)_{c+e}-(CH₂CH(CH₃)O)_{d}-H, le ratio 44(c+e)/(44(c+e)+58d) étant compris entre 0,01 et 0,7, la somme 44(c+e)+58d+18 étant comprise entre 500 et 20.000, seul ou en mélange avec d'autres membres de cette classe, et dont le dosage global ramené à la tonne de produit bitumineux est de préférence compris entre 0,1 et 9, de préférence 6 et avantageusement 5 kg
> additif D1 : mélange d'au moins un produit A et un ou plusieurs dopes d'adhésivité, le dosage en produit(s) A ramené à la tonne de produit bitumineux étant de préférence compris entre 0,1 et 9 kg, le dosage en dope(s) d'adhésivité ramené à la tonne de produit bitumineux étant de préférence compris entre 0,05 et 10 kg, le ratio massique entre le produit A et le(s) dope(s) d'adhésivité étant compris entre 95-5 et 10-90, et préférentiellement compris entre 95-5 et 50-50.
**caractérisé en ce qu'**il comprend la mise en contact de l'additif avec le produit bitumineux à une température comprise dans la gamme de températures allant de 100 à 200°C et de préférence allant de 120 à 180°C préalablement à l'émulsification.

9. Mélange d'une émulsion préparée selon la revendication 8 avec des granulats sous forme d'enrobés coulés à froid.

10. Utilisation des enrobés coulés à froid selon la revendication 9 dans le domaine de l'étanchéité, la construction et l'entretien de tapis routiers, de trottoirs et pistes d'aviation, tapis routiers, trottoirs, pistes cyclables, aires de stationnement et pistes d'aviation.

## Patentansprüche

1. Wasserfreie bituminöse Produkte, **dadurch gekennzeichnet, dass** sie wenigstens einen Zusatz aus der folgenden Liste enthalten:
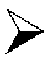 Zusatz A: Copolymer(e) Ethylenoxid - Propylenoxid, statistische oder Blockcopolymere, mit einer molaren Masse zwischen 500 g/mol und 20.000 g/mol, mit einem Massenverhältnis Ethylenoxid zu (Ethylenoxid + Propylenoxid) zwischen 1 % und 70 %, mit einer chemischen Summenformel für das statistische Copolymer HO-(CH₂CH₂O)ₐ-(CH₂CH(CH₃)O)_{b}-H, wobei das Massenverhältnis Ethylenoxid zu (Ethylenoxid + Propylenoxid) 44a/(44a+58b) zwischen 0,01 und 0,7 liegt, wobei die Summe 44a+58b+18 zwischen 500 und 20.000 liegt, mit einer chemischen Formel für das Blockcopolymer HO-(CH₂CH₂O)_{c}-(CH₂CH(CH₃)O)_{d}-(CH₂CH₂O)ₑ-H oder HO-(CH₂CH₂O)_{c+e}-(CH₂CH(CH₃)O)_{d}-H, wobei das Massenverhältnis Ethylenoxid zu (Ethylenoxid + Propylenoxid) 44(c+e)/(44(c+e)+58d) zwischen 0,01 und 0,7 liegt, wobei die Summe 44(c+e)+58d+18 zwischen 500 und 20.000 liegt, allein oder im Gemisch mit anderen Mitgliedern dieser Klasse, und dessen Gesamtdosierung, bezogen auf eine Tonne bituminöses Produkt, zwischen 0,1 und 9, vorzugsweise 8 und vorteilhafterweise 6 kg liegt;
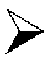 Zusatz B: Mischung wenigstens eines Produkts A und wenigstens eines Produkts A1 mit der chemischen Formel (R-O-(CH₂CH(CH₃)O)ₐ-(CH₂CH₂O)_{b})_{c}P(=O) -OH_{d}, wobei P das Phosphoratom ist, c zwischen 1 und 2 liegt, c+d gleich 3 ist, a zwischen 0 und 10 liegt, b zwischen 0 und 6 liegt und R eine Kohlenwasserstoffkette darstellt, die 6 bis 30 Kohlenstoffatome besitzt, wobei die Dosierung des Produkts (der Produkte) A, bezogen auf eine Tonne bituminöses Produkt, zwischen 0,05 und 9, vorzugsweise 8 und vorteilhafterweise 6 kg liegt, wobei die Gesamtdosierung des Zusatzes A1, bezogen auf eine Tonne bituminöses Produkt, vorzugsweise zwischen 0,05 und 10 kg liegt und die jeweiligen Anteile der zwei Produkte zwischen 90-10 und 10-90 liegen,
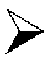 Zusatz C: Mischung wenigstens eines Produkts A oder wenigstens eines Produkts A1 oder wenigstens eines Produkts B und wenigstens eines Produkts A2, mit einer Dosierung des Produkts (der Produkte) A, bezogen auf eine Tonne bituminöses Produkt, zwischen 0,05 und 9, vorzugsweise 8 und vorteilhafterweise 6 kg, mit einer Dosierung des Produkts (der Produkte) A1 oder B, bezogen auf eine Tonne bituminöses Produkt, vorzugsweise zwischen 0,05 und 10 kg, mit einer Dosierung des Produkts (der Produkte) A2, bezogen auf eine Tonne bituminöses Produkt, vorzugsweise zwischen 0,05 und 10 kg, wobei das Produkt A2 ausgewählt ist aus:
• dem Produkt A21, Produkt der Reaktion von (Di)alk(en)ylphenolen mit Aldehyden, wobei die Aldehyde 1 bis 10 Kohlenstoffe und insbesondere 1 bis 5 Kohlenstoffatome aufweisen, gefolgt von einer (Poly)oxyethylation und/oder (Poly)oxypropylation, wobei die Alk(en)ylgruppen zwischen 1 und 50 Kohlenstoffatomen und vorzugsweise zwischen 2 und 20 Kohlenstoffatome aufweisen und im Fall von Dialk(en)ylphenolen identisch oder verschieden sein können, wobei der Teil, der durch (Poly)oxyethylation und/oder (Poly)oxypropylation gebildet wird, eine molare Masse aufweist, die größer oder gleich 45 g/mol und kleiner als 20.000 g/mol ist, wobei die Anzahl der phenolischen Einheiten des Produkts A zwischen 3 und 50 variiert,
• dem Produkt A22, Copolymer 2,2-Bis(4-hydroxyphenyl)propan - (poly)oxyethyliertes und/oder (poly)oxypropyliertes Epichlorhydrin, wobei der Teil, der durch (Poly)oxyethylation und/oder (Poly)oxypropylation gebildet wird, eine molare Masse aufweist, die größer oder gleich 45 g/mol und kleiner als 20.000 g/mol ist,
• dem Produkt A23, Copolymer Bis(4-hydroxyphenyl)ethan - (poly)oxyethyliertes und/oder (poly)oxypropyliertes Epichlorhydrin, wobei der Teil, der durch (Poly)oxyethylation und/oder (Poly)oxypropylation gebildet wird, eine molare Masse aufweist, die größer oder gleich 45 g/mol und kleiner als 20.000 g/mol ist,
• dem Produkt A24, Copolymer Bis(4-hydroxyphenyl)methan - (poly)oxyethyliertes und/oder (poly)oxypropyliertes Epichlorhydrin, wobei der Teil, der durch (Poly)oxyethylation und/oder (Poly)oxypropylation gebildet wird, eine molare Masse aufweist, die größer oder gleich 45 g/mol und kleiner als 20.000 g/mol ist,
• dem Produkt A25, Produkt der (Poly)oxyethylation und/oder (Poly)oxypropylation einer Alkyldicarbonsäure oder Mischung von Alkyldicarbonsäuren, wobei die Alkylgruppen zwischen 1 und 20 Kohlenstoffatome und vorzugsweise zwischen 1 und 10 aufweisen, wobei die Gesamtheit der Teile, die durch (Poly)oxyethylation und/oder (Poly)oxypropylation gebildet werden, eine molare Masse aufweist, die größer als 100 g/mol und kleiner als 20.000 g/mol ist,
• dem Produkt A26, Produkt der (Poly)oxyethylation und/oder (Poly)oxypropylation einer Fettsäure, deren Anzahl von Kohlenstoffatomen zwischen 10 und 30 liegt, und insbesondere einer Tallölfettsäure, wobei der Teil, der durch (Poly)oxyethylation und/oder (Poly)oxypropylation gebildet wird, eine molare Masse aufweist, die größer als 100 g/mol und kleiner als 20.000 g/mol ist,
• dem Produkt A27, Produkt der Reaktion zwischen dem Produkt A21 und der Mischung der Produkte A25 und A26,
• dem Produkt A28, Salz von Alk(en)yl(aryl)sulfonsäure und Al(en)yl(aryl)amin, wobei die Alk(en)yl(aryl)-Einheiten eine Anzahl von Kohlenstoffatomen zwischen 6 und 30 aufweisen, und insbesondere dem Salz von Dodecylbenzolsulfonsäure und Talgamin, sowie dem Salz von Dodecylbenzolsulfonsäure und Cyclohexylamin,
• und/oder dem Produkt A29, Salz von Alk(en)yl(aryl)sulfonsäure und Morpholin oder Pyrazin oder Pyrazolin oder Pyrazolon oder Pyridin oder Pyridon oder Pyrimidin oder Pyrrol oder Pyrrolidin oder Pyrrolidon oder Pyrrolin oder Toluidin oder Imidazol oder Indol oder Indolin oder Oxindol, wobei die Alk(en)yl(aryl)-Einheiten eine Anzahl von Kohlenstoffatomen zwischen 6 und 30 aufweisen, und insbesondere dem Salz von Dodecylbenzolsulfonsäure und Morpholin,
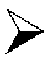 Zusatz D: Mischung wenigstens eines Produkts A oder wenigstens eines Produkts B oder wenigstens eines Produkts C und eines oder mehrerer Haftmittel, wobei die Dosierung des Produkts (der Produkte) B oder C, bezogen auf eine Tonne bituminöses Produkt, zwischen 0,1 und 10 kg liegt, wobei die Dosierung des Produkts (der Produkte) A, bezogen auf eine Tonne bituminöses Produkt, zwischen 0,05 und 9, vorzugsweise 8 und vorteilhafterweise 6 kg liegt, wobei die Dosierung des Haftmittels (der Haftmittel), bezogen auf eine Tonne bituminöses Produkt, vorzugsweise zwischen 0,05 und 10 kg liegt, wobei das Massenverhältnis zwischen dem Produkt A, B oder C und dem (den) Haftmittel(n) vorzugsweise zwischen 90-10 und 10-90 liegt und vorteilhafterweise zwischen 90-10 und 40-60 liegt.

2. Verfahren zur Herstellung des bituminösen Produkts nach Anspruch 1, **dadurch gekennzeichnet, dass** es das Inkontaktbringen der Komponente oder Komponenten des Zusatzes mit dem bituminösen Produkt bei einer Temperatur umfasst, die im Temperaturbereich von 100 bis 250 °C liegt.

3. Mischungen der bituminösen Produkte, wie in Anspruch 1 definiert, mit Granulaten in Form von Mischgütern.

4. Verfahren zur Herstellung der Mischgüter nach Anspruch 3, **dadurch gekennzeichnet, dass** ein Mischen des bituminösen Produkts und von Granulaten durchgeführt wird, und dadurch, dass die Temperaturen der Kornfraktionen unterschiedlich sein und die Herstellung eines Mischgutes bei einer Temperatur zwischen 60 und 200 °C und vorzugsweise zwischen 100 und 200 °C ermöglichen können.

5. Verfahren zur Herstellung der Mischung von bituminösem Produkt und Granulaten nach Anspruch 4, **dadurch gekennzeichnet, dass** das Mischen von bituminösem Produkt und Granulaten bei einer Temperatur des bituminösen Produkts durchgeführt wird, die im Temperaturbereich von 100 bis 250 °C liegt.

6. Verfahren zur Herstellung der Mischung von bituminösem Produkt und Granulaten nach Anspruch 4 bis 5, **dadurch gekennzeichnet, dass** der Zusatz nach Anspruch 1 vor oder während der Zugabe des bituminösen Produkts in den Mischer gegeben wird.

7. Verwendung der Mischgüter von Anspruch 4 zur Dichtheit, zum Bau und zur Instandhaltung von Straßenbelägen, Gehwegen, Radwegen, Parkplätzen und Start- und Landebahnen für Flugzeuge.

8. Verfahren zur Herstellung kationischer wässriger Emulsionen eines wasserfreien bituminösen Produkts nach Anspruch 1, das wenigstens einen Zusatz aus der folgenden Liste enthält:
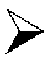 Zusatz A: Copolymer(e) Ethylenoxid - Propylenoxid, statistische oder Blockcopolymere, mit einer molaren Masse zwischen 500 g/mol und 20.000 g/mol, mit einem Massenverhältnis Ethylenoxid zu (Ethylenoxid + Propylenoxid) zwischen 1 % und 70 %, mit einer chemischen Summenformel für das statistische Copolymer HO-(CH₂CH₂O)ₐ-(CH₂CH(CH₃)O)_{b}-H, wobei das Massenverhältnis Ethylenoxid zu (Ethylenoxid + Propylenoxid) 44a/(44a+58b) zwischen 0,01 und 0,7 liegt, wobei die Summe 44a+58b+18 zwischen 500 und 20.000 liegt, mit einer chemischen Formel für das Blockcopolymer HO-(CH₂CH₂O)_{c}-(CH₂CH(CH₃)O)_{d}-(CH₂CH₂O)ₑ-H oder HO-(CH₂CH₂O)_{c+e}-(CH₂CH(CH₃)O)_{d}-H, wobei das Verhältnis 44(c+e)/(44(c+e)+58d) zwischen 0,01 und 0,7 liegt, wobei die Summe 44(c+e)+58d+18 zwischen 500 und 20.000 liegt, allein oder im Gemisch mit anderen Mitgliedern dieser Klasse, und dessen Gesamtdosierung, bezogen auf eine Tonne bituminöses Produkt, vorzugsweise zwischen 0,1 und 9, vorzugsweise 6 und vorteilhafterweise 5 kg liegt;
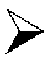 Zusatz D1: Mischung wenigstens eines Produkts A und eines oder mehrerer Haftmittel, wobei die Dosierung des Produkts (der Produkte) A, bezogen auf eine Tonne bituminöses Produkt, vorzugsweise zwischen 0,1 und 9 kg liegt, wobei die Dosierung des Haftmittels (der Haftmittel), bezogen auf eine Tonne bituminöses Produkt, vorzugsweise zwischen 0,05 und 10 kg liegt, wobei das Massenverhältnis zwischen dem Produkt A und dem (den) Haftmittel(n) zwischen 95-5 und 10-90 und vorzugsweise zwischen 95-5 und 50-50 liegt,
**dadurch gekennzeichnet, dass** es das Inkontaktbringen des Zusatzes mit dem bituminösen Produkt bei einer Temperatur im Temperaturbereich von 100 bis 200 °C und vorzugsweise von 120 bis 180 °C vor der Emulgierung umfasst.

9. Mischung einer gemäß Anspruch 8 hergestellten Emulsion mit Granulaten in Form von kalt gegossenen Mischgütern.

10. Verwendung der kalt gegossenen Mischgüter nach Anspruch 9 im Bereich der Dichtheit, des Baus und der Instandhaltung von Straßenbelägen, von Gehwegen und Start- und Landebahnen für Flugzeuge, Straßenbelägen, Gehwegen, Radwegen, Parkplätzen und Start- und Landebahnen für Flugzeuge.

## Claims

1. Anhydrous bituminous products, **characterized in that** they contain at least one additive from the following list:
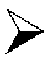 additive A: random or block ethylene oxide/propylene oxide copolymer(s) having a molecular weight between 500 g/mol and 20 000 g/mol, with a weight ratio of ethylene oxide to (ethylene oxide + propylene oxide) between 1% and 70%, of empirical chemical formula for the random copolymer: HO-(CH₂CH₂O)ₐ-(CH₂CH(CH₃)O)_{b}-H, the weight ratio of ethylene oxide to (ethylene oxide + propylene oxide) 44a/(44a+58b) being between 0.01 and 0.7, the sum 44a+58b+18 being between 500 and 20 000, of chemical formula for the block copolymer: HO-(CH₂CH₂O)_{c}-(CH₂CH(CH₃)O)_{d}-(CH₂CH₂O)ₑ-H or HO-(CH₂CH₂O)_{c+e}-(CH₂CH(CH₃)O)_{d}-H, the weight ratio of ethylene oxide to (ethylene oxide + propylene oxide) 44(c+e)/(44(c+e)+58d) being between 0.01 and 0.7, the sum 44(c+e)+58d+18 being between 500 and 20 000, alone or as a blend with other members of this class, and of which the overall dose per metric ton of bituminous product is between 0.1 and 9 kg, preferably 8 kg and advantageously 6 kg;
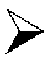 additive B: blend of at least one product A and at least one product A1 of chemical formula: (R-O-(CH₂CH(CH₃)O)ₐ)-(CH₂CH₂O)_{b})_{c}P(=O)-OH_{d} where P is a phosphorus atom, c is between 1 and 2, c + d is equal to 3, a is between 0 and 10, b is between 0 and 6 and R represents a hydrocarbon-based chain having 6 to 30 carbon atoms, the dose of product(s) A per metric ton of bituminous product being between 0.05 and 9 kg, preferably 8 kg and advantageously 6 kg, the overall dose of additive A1 per metric ton of bituminous product preferably being between 0.05 and 10 kg and the respective proportions of the two products being between 90/10 and 10/90;
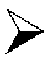 additive C: blend of at least either one product A or at least either one product A1 or at least either one product B and at least one product A2, in a dose of product(s) A per metric ton of bituminous product between 0.05 and 9 kg, preferably 8 kg and advantageously 6 kg, in a dose of product (s) A1 or B per metric ton of bituminous product preferably between 0.05 and 10 kg, in a dose of product (s) A2 per metric ton of bituminous product preferably between 0.05 and 10 kg, the product A2 being chosen from:
• the product A21, product of the reaction of (di)alk(en)ylphenols with aldehydes, the aldehydes having from 1 to 10 carbon atoms and more particularly from 1 to 5 carbon atoms, followed by a (poly)oxyethylation and/or (poly)oxypropylation, the alk(en)yl groups having between 1 and 50 carbon atoms and preferably between 2 and 20 carbon atoms and possibly being identical or different in the case of dialk(en)ylphenols, the part formed by (poly)oxy-ethylation and/or (poly)oxypropylation having a molecular weight greater than or equal to 45 g/mol and less than 20 000 g/mol, the number of phenol units of the product A varying between 3 and 50;
• the product A22, (poly)oxyethylated and/or (poly)oxypropylated 2,2-bis(4-hydroxyphenyl)-propane/epichlorohydrin copolymer, the part formed by (poly)oxyethylation and/or (poly)oxypropylation having a molecular weight greater than or equal to 45 g/mol and less than 20 000 g/mol;
• the product A23, (poly)oxyethylated and/or (poly)oxypropylated bis(4-hydroxyphenyl)ethane/epichlorohydrin copolymer, the part formed by (poly)oxyethylation and/or (poly)oxypropylation having a molecular weight greater than or equal to 45 g/mol and less than 20 000 g/mol;
• the product A24, (poly)oxyethylated and/or (poly)oxypropylated bis(4-hydroxyphenyl)methane/epichlorohydrin copolymer, the part formed by (poly)oxyethylation and/or (poly)oxypropylation having a molecular weight greater than or equal to 45 g/mol and less than 20 000 g/mol;
• the product A25, product of the (poly)oxyethylation and/or (poly)oxypropylation of an alkyldicarboxylic acid or mixture of alkyldicarboxylic acids, the alkyl groups having between 1 and 20 carbon atoms and preferably between 1 and 10 carbon atoms, all of the parts formed by (poly)oxyethylation and/or (poly)oxypropylation having a molecular weight greater than 100 g/mol and less than 20 000 g/mol;
• the product A26, product of the (poly)oxyethylation and/or (poly)oxypropylation of a fatty acid, the number of carbon atoms of which is between 10 and 30, and more particularly the fatty acid of tall oil, the part formed by (poly)oxyethylation and/or (poly)oxypropylation having a molecular weight greater than 100 g/mol and less than 20 000 g/mol;
• the product A27, product of the reaction between the product A21 and the mixture of products A25 and A26;
• the product A28, salt of alk(en)yl(aryl)sulfonic acid and alk(en)yl(aryl)amine, the alk(en)yl(aryl) units having a number of carbon atoms between 6 and 30, and more particularly the salt of dodecylbenzenesulfonic acid and tallow amine, and also the salt of dodecylbenzenesulfonic acid and cyclohexylamine; and/or the product A29, salt of alk(en)yl(aryl)sulfonic acid and morpholine or pyrazine or pyrazoline or pyrazolone or pyridine or pyridone or pyrimidine or pyrrole or pyrrolidine or pyrrolidone or pyrroline or toluidine or imidazole or indole or indoline or oxindole, the alk(en)yl(aryl) units having a number of carbon atoms between 6 and 30, and more particularly the salt of dodecylbenzenesulfonic acid and morpholine;
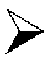 additive D: blend of at least one product A or at least one product B or at least one product C and one or more adhesion dopes, the dose of product(s) B or C per metric ton of bituminous product being between 0.1 and 10 kg, the dose of product (s) A per metric ton of bituminous product being between 0.05 and 9 kg, preferably 8 kg and advantageously 6 kg, the dose of adhesion dope(s) per metric ton of bituminous product preferably being between 0.05 and 10 kg, the weight ratio of the product A, B or C to the adhesion dope(s) preferably being between 90/10 and 10/90, and advantageously between 90/10 and 40/60.

2. Process for preparing the bituminous product according to Claim 1, **characterized in that** it comprises bringing the additive component(s) into contact with the bituminous product at a temperature within the temperature range stretching from 100 to 250°C.

3. Mixes of bituminous products as defined in Claim 1, with aggregates in the form of bituminous mixes.

4. Process for preparing bituminous mixes according to Claim 3, **characterized in that** the mixing of the bituminous product and aggregates is carried out, and **in that** the temperatures of the granular fractions may be different and make it possible to produce a bituminous mix at a temperature between 60 and 200°C, and preferably between 100 and 200°C.

5. Process for preparing the mix of bituminous product and aggregates according to Claim 4, **characterized in that** the mixing of the bituminous product and aggregates is carried out at a temperature of the bituminous product within the temperature range stretching from 100 to 250°C.

6. Process for preparing the mix of bituminous product and aggregates according to Claims 4 and 5, **characterized in that** the additive according to Claim 1 is added to the mixer before or during the addition of the bituminous product.

7. Use of bituminous mixes according to Claim 4, for sealing, construction and repair of road coverings, pavements, cycle paths, parking areas and aircraft runways.

8. Process for preparing cationic aqueous emulsions of anhydrous bituminous products according to Claim 1 containing at least one additive from the following list:
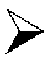 additive A: random or block ethylene oxide/propylene oxide copolymer(s) having a molecular weight between 500 g/mol and 20 000 g/mol, with a weight ratio of ethylene oxide to (ethylene oxide + propylene oxide) between 1% and 70%, of empirical chemical formula for the random copolymer: HO-(CH₂CH₂O)ₐ-(CH₂CH(CH₃)O)_{b}-H, the weight ratio of ethylene oxide to (ethylene oxide + propylene oxide) 44a/(44a+58b) being between 0.01 and 0.7, the sum 44a+58b+18 being between 500 and 20 000, of chemical formula for the block copolymer: HO-(CH₂CH₂O)_{c}-(CH₂CH(CH₃)O)_{d}-(CH₂CH₂O)ₑ-H or HO-(CH₂CH₂O)_{c+e}-(CH₂CH(CH₃)O)_{d}-H, the ratio 44 (c+e) / (44(c+e)+58d) being between 0.01 and 0.7, the sum 44(c+e)+58d+18 being between 500 and 20 000, alone or as a blend with other members of this class, and of which the overall dose per metric ton of bituminous product is preferably between 0.1 and 9 kg, preferably 6 kg and advantageously 5 kg;
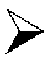 additive D1: blend of at least one product A and one or more adhesion dopes, the dose of product(s) A per metric ton of bituminous product preferably being between 0.1 and 9 kg, the dose of adhesion dope(s) per metric ton of bituminous product preferably being between 0.05 and 10 kg, the weight ratio of the product A to the adhesion dope(s) being between 95/5 and 10/90, and preferably between 95/5 and 50/50, **characterized in that** it comprises bringing the additive into contact with the bituminous product at a temperature within the temperature range stretching from 100 to 200°C, and preferably stretching from 120 to 180°C, prior to the emulsification.

9. Mix of an emulsion prepared according to Claim 8 with aggregates in the form of cold-poured bituminous mixes.

10. Use of the cold-poured bituminous mixes according to Claim 9, in the field of sealing, construction and repair of road coverings, pavements and aircraft runways, road coverings, pavements, cycle paths, parking areas and aircraft runways.
